# EUROPEAN PATENT SPECIFICATION

(11) **EP 0 698 484 B1**
(45) Date of publication and mention of the grant of the patent: **19.07.2000**
(21) Application number: 95302532.7
(22) Date of filing: 18.04.1995
(51) Int. Cl.: B32B 15/08, B05D 7/14

(54) **Composite metal sheet and method for producing it**
Verbundplatte aus Metall und Verfahren zu ihrer Herstellung
Feuille métallique composée et procédé de sa fabrication

(30) Priority: 25.08.1994 JP 22272794
(43) Date of publication of application: 28.02.1996
(73) Proprietor: TAIYO STEEL CO., LTD., Chuo-ku Tokyo 103 (JP)
(72) Inventor: Kameya, Toru, Chiba-shi, Chiba-ken (JP); Takano, Katsuaki, Ichikawa-shi, Chiba-ken (JP)
(74) Representative: Stuart, Ian Alexander

(56) References cited:
- EP-A- 0 063 395
- EP-A- 0 578 364
- DATABASE WPI Section Ch, Week 9339 Derwent Publications Ltd., London, GB; Class A18, AN 93-308764 XP002001334 & JP-A-05 220 895 (MITSUBISHI PETROCHEMICAL CO LTD) , 31 August 1993

## Description

The present invention relates to a composite metal sheet having excellent corrosion resistance, weather resistance and formability, which is composed of a metal sheet, such as a zinc-plated steel sheet, an aluminium/zinc alloy-plated steel sheet, an aluminium-plated steel sheet, an aluminium sheet, a stainless steel sheet or the like, coated with a polyolefinic thermoplastic resin and a thermosetting synthetic resin paint, and also to a method for producing such a composite metal sheet.

Coated and surface-treated metal sheets which have heretofore been used as outdoor construction materials are produced, in general, by coating various metal sheets, such as zinc melt-plated steel sheets, electrolytic zinc-plated steel sheets, 5 % Al/Zn alloy-plated steel sheets, 55 % Al/Zn alloy-plated steel sheets, aluminium-plated steel sheets, aluminium sheets, stainless steel sheets, etc., by continuous coating methods, continuous film-laminating method or continuous hot-melt coating methods such as those mentioned below.
(1) According to a continuous coating method, various metal sheets are chemically treated and then various coating materials are continuously coated thereover, using roll coaters, etc., and then dried to produce color metal sheets.
(2) According to a continuous film-laminating method, various metal sheets are chemically treated, then coated with undercoat materials such as adhesives, etc. and dried, and thereafter various resin films are continuously laminated thereover to produce various laminate metal sheets.
(3) According to a continuous hot-melt coating method, the surfaces of various metal sheets are chemically treated, then coated with undercoat compositions and dried, and thereafter continuously coated with an adhesive layer of a modified polyolefin resin and a polyolefin resin layer by co-extruding the both resins from a T-die thereover to produce various resin-coated metal sheets.

Coated and surface-treated metal sheets thus produced by these methods have excellent corrosion resistance, weather resistance and formability and are desirably decorated, and their quality is stabilized. In addition, such coated and surface-treated metal sheets do not need any posterior coating step after machined or constructed. Therefore, the use of these is broadening as materials for outdoor constructions.

The necessary properties of such coated and surface-treated metal sheets to be used as construction materials are high weather resistance, corrosion resistance, formability and scratch resistance. Recently, however, the surroundings for outdoor constructions are being worsened, for example, by acid rain, etc., while, on the other hand, maintenance-free use of outdoor constructions is needed in such severe surroundings. Therefore, coated and surface-treated metal sheets for outdoor constructions are needed to have much more improved properties.

In view of the weather resistance, the practical usefulness of fluorine resin-based coating compositions for maintenance-free outdoor constructions has been verified. Steel sheets coated with a thick polyvinyl chloride film, polyethylenic resin-coated steel sheets, etc. have been used, as having high corrosion resistance.

Steel sheets coated with fluorine resin-based compositions have been verified to have extremely excellent weather resistance when used as outdoor construction materials for a long period of time. In these sheets, however, the thickness of the coated layer is rather small, in general, from 20 to 35 µm or so and the hardness of the coated layer is somewhat low. Therefore, these sheets have a problem in that they are often scratched deeply to the metal substrate when shaped or machined by bending or roll-forming or when constructed so that they are corroded from the scratches.

In order to solve these problems, there has been developed a technique of introducing glass beads into the coated layer to elevated the hardness of the coated layer, thereby improving its scratch resistance and abrasion resistance, while maintaining the advantages of the fluorine resin-based coating compositions. However, since the thickness of the fluorine resin layers coated on steel sheets is ordinary thin, the improvement by the technique is not satisfactory. Therefore, in general, it is necessary to protect the layer by a protective film or to retouch the scratched parts by post-coating after shaped. Thus, the fluorine resin-coated steel sheets, though having excellent weather resistance, have a problem in that they are easily scratched during its forming, or its handling for use.

On the other hand, in polyvinyl chloride-coated steel sheets and polyolefinic resin-coated steel sheets, the thickness of the coated layer is generally from 150 to 300 µm or so. Therefore, even though these sheets are scratched, when machined or constructed, the scratches may be within the coated layers and hardly reach the metal substrate. In addition, since these sheets are machined with ease, the machined parts are not cracked. Therefore, these sheets have excellent corrosion resistance.

However, since the energy for bonding the atoms constituting the molecules in these resins is smaller than that in fluorine resins and is smaller than the energy of sun light, these resins are rapidly deteriorated when used in the outdoors, even though their molecular weights and molecular weight distributions are suitably controlled or even though antioxidants, ultraviolet absorbents, etc. are added thereto. Thus, these resins cannot be said to have sufficient weather resistance.

In addition, since the thickness of the coated layers of these coated steel sheets is thick, their properties as flame-resistant materials are poor. In order to solve this problem, there is known a method of thinning the polyolefin layer, such as that shown in Japanese Patent Publication No. 6-26874. However, this method still has a problem in that the scratch resistance of the thus-thinned layer is lowered.

The present invention has been made in consideration of the above-mentioned problems. A preferred embodiment may provide a composite metal sheet having excellent machinability (formability), weather resistance and corrosion resistance, which could not be obtained by any of continuous coating methods, continuous film-laminating methods and hot-melt coating methods for producing various metal sheets, and also provide a method for producing such a composite metal sheet.

The present invention in different aspects provides:
(1) A composite metal sheet having, on the surface of a metal substrate, a chemical-treated layer as the lowest layer, a primer layer of an organic resin-based paint thereon, a two-layered resin interlayer with a thickness of from 50 to 300 µm composed of an adhesive layer of a modified polyolefin resin and a polyolefin resin layer, the surface of said resin interlayer having been modified to have functional groups thereon in an amount of from 0.05 to 0.30 of O/C representing the ratio of the amount of oxygens in the functional groups to the amount of carbons on the surface, and a top coat layer with a thickness of from 8 to 35 µm made of an urethane-hardening polyester paint or an urethane-hardening fluorine paint, in this order.
(2) A method of producing a composite metal sheet comprising steps of chemically treating the surface of a metal substrate, coating and drying an organic resin-based paint thereon to form a primer layer, then forming thereon a two-layered resin interlayer composed of an adhesive layer of a modified polyolefin resin and a polyolefin resin layer at a thickness of from 50 to 300 µm, then modifying the surface of said polyolefin resin layer by flame treatment or corona discharging treatment thereby forming functional groups thereon in an amount of from 0.05 to 0.30 in terms of O/C representing the ratio of the amount of oxygens in the functional groups to the amount of carbons on the surface, and finally coating and drying an urethane-hardening polyester paint or an urethane-hardening fluorine paint at a thickness of from 8 to 35 µm to form a top coat layer.

The present invention will be described in detail hereunder.

The metal substrate to be coated according to the present invention may be any of a zinc-plated steel sheet, an aluminium/zinc alloy-plated steel sheet, an aluminium-plated steel sheet, an aluminium sheet, a stainless steel sheet, etc. The surface of the metal substrate is chemically treated, by which the adhesiveness between the metal substrate and the undercoat layer is improved and, in addition, the corrosion resistance of the composite metal sheet of the invention is improved.

For the chemical conversion treatment, in general, used are phosphoric acid compounds for spraying or dipping treatment or chromic acid compounds for coating treatment. These compounds are suitably selected, depending on the kind of the metal substrate to be treated therewith.

Next, the surface of the thus chemically-treated metal substrate is coated with a primer paint and dried. Where the metal substrate to be coated is a zinc-plated steel sheet, an aluminium/zinc alloy-plated steel sheet, an aluminium-plated steel sheet or an aluminium sheet, strontium chromate or zinc chromate or a mixture of the two may be added as a rust-inhibiting pigment to the undercoat paint in an amount of from 10 to 40 parts by weight to 100 parts by weight of the resin in the composition, by which the corrosion resistance of the composite metal sheet of the invention may be improved further.

If the amount of the rust-inhibiting pigment is less than 10 parts by weight, the corrosion resistance of the composite metal sheet of the invention will be insufficient, but if it is more than 40 parts by weight, the improvement in the corrosion resistance is no more enhanced but the moisture resistance of the undercoat layer will be lowered rather unfavorably. It is recommended that the dry thickness of the undercoat layer is within the range between 1 µm and 20 µm.

Next, a two-layered composite film composed of an adhesive layer of a modified polyolefin resin and a polyolefin resin layer is coated over the surface of the thus-formed undercoat layer by co-extruding hot melts of the two resins from an extruder through its T-die, thus forming the two-layered resin interlayer on the metal sheet by direct coating under pressure, or alternatively, such a two-layered composite film is previously formed and wound up and the film is laminated on the undercoat layer to form the intended resin interlayer thereon.

In this method, the adhesive layer is employed to improve the adhesion between the undercoat layer and the resin interlayer.

In general, a thermal stabilizer and/or an optical stabilizer are/is added to the polyolefin resin layer so as to prevent the layer from being decomposed by oxidation or ultraviolet rays.

According to the present invention, a top coat layer is provided on the coated metal sheet in the manner mentioned hereinafter. Therefore, since the polyolefin resin layer is not directly exposed to oxygen, ultraviolet rays, etc., the addition of such thermal stabilizer and optical stabilizer is not indispensable.

However, it is recommended to add a thermal stabilizer and an optical stabilizer to the resin layer, presuming the probability that the top coat layer will be broken by scratching, etc., when the composite metal sheet of the invention is machined or constructed.

It is recommended that the thickness of the two-layered resin interlayer composed of an adhesive layer of a modified polyolefin resin and a polyolefin resin layer is within the range between 50 µm and 300 µm, but the thickness is more preferably with the range between 80 µm and 300 µm.

The thickness of the adhesive layer of a modified polyolefin resin is preferably within the range between 5 µm and 30 µm. If it is less than 5 µm, the adhesiveness between the undercoat layer and the adhesive layer will be unstable, but if it is more than 30 µm, such does not result in the increase in the adhesiveness of the layer but rather increases the cost of the product.

As the polyolefin resin, preferably used are a polyethylene resin, a polypropylene resin and a mixture of polyethylene and polypropylene resins.

If the thickness of the resin interlayer is less than 50 µm, the severe formability of the composite metal sheet of the invention for embossing it and so on will be poor and the sheet is defective in that the machined area of its coat is often cracked.

The reason why the thickness of the polyolefin resin interlayer is preferably 80 µm or more is because, since polyolefin resins have excellent resistance against water penetration and moisture penetration therethrough, the interlayer is effective in protecting the metal substrate from the outdoor corroding environment when the composite metal sheet of the invention is used in the outdoors. If the thickness of the resin interlayer is less than 80 µm, there will be a great risk of being such that the scratches made on the composite metal sheet product of the invention when the sheet is machined or constructed reach the metal substrate. If so, it will be difficult to expect sufficient corrosion resistance of the composite metal sheet, even though the polyolefin resin layer has excellent resistance against water penetration and moisture penetration therethrough.

On the other hand, even if the thickness of the resin interlayer is more than 300 µm, its characteristic of preventing scratches could not be improved so much but the workability in hot melt extrusion of the resin is rather lowered with the result that the production costs are increased.

When the thickness of the resin interlayer is 100 µm or more, the flame resistance of the composite metal sheet of the invention is lowered. If the sheet is desired to be flame-resistant, antimony trioxide and a bromine-containing flame retardant may be added to the resin interlayer by which the flame resistance of the sheet is improved.

As the bromine-containing flame retardant, typically mentioned are tetrabromobisphenol- A, decabromobisphenyl ether, etc.

As one means to be used for evaluating the flame resistance of resins, there is known an oxygen index. In general, polyolefin resins have an oxygen index of about 18 %.

Adding the above-mentioned antimony trioxide and bromine compound to the resin interlayer, it is possible to increase the oxygen index of the resulting interlayer. Elevating its oxygen index more than the oxygen concentration in air, the flame resistance of the resin interlayer can be improved.

It is recommended that the amounts of such antimony trioxide and bromine compound to be added are from 3 to 15 parts by weight each, to 100 parts by weight of the resin.

If the amounts are less than 3 parts by weight, the improvement in the flame resistance of the interlayer will be insufficient. If, however, they are more than 15 parts by weight, the improvement in its flame resistance will no more be enhanced but the formability of the composite metal sheet of the invention will be worsened rather defectively.

After the resin interlayer has been formed, its surface is modified by flame treatment or corona discharging treatment, by which functional groups such as hydroxyl group, carbonyl group, carboxyl group, etc. are formed on the surface of the polyolefin resin layer so that the polarity of the surface is elevated and the adhesiveness between the layer and the top coat layer to be formed thereover is improved.

If the surface of the polyolefin resin layer is not modified, its adhesiveness to the top coat layer to be formed thereover cannot almost be ensured.

The degree of the surface modification of the resin interlayer may be determined by analyzing the oxygen amount (O) and the carbon amount (C) on the modified surface, using ESCA (X-ray Photoelectron Spectroscopy ; XPS), followed by obtaining its ratio of O/C.

Precisely, the oxygen amount means the amount of oxygens to be contained in the functional groups formed by the surface modification. With the progress of the surface modification, the oxygen amount is increased, resulting in the increase in the ratio O/C.

The matter to which the inventor has paid the best attention is to specifically determine the O/C value. The reason is because if the adhesiveness of the polyolefin resin layer to the top coat layer is lost while the composite metal sheet is used in the outdoors for a long period of time with the result that the top coat layer is peeled from the underlying polyolefin resin layer, then not only the quality of the sheet but also the commercial value thereof is noticeably damaged.

From the results of various tests which will be mentioned hereinafter, it has been found that the O/C value at which the adhesiveness between the two layers is stabilized is within the range between 0.05 and 0.30 just before coating the top coat layer over the polyolefin resin layer.

If the O/C value is less than 0.05, the amount of the functional groups on the surface of the polyolefin resin layer is smaller than the necessary one, so that the adhesiveness between the polyolefin resin layer and the top coat layer thereon cannot be ensured satisfactorily.

On the other hand, even if the O/C value is more than 0.30, the adhesiveness between them is no more improved but is rather lowered due to the increase in unstable functional groups on the resin layer.

Selection of the kind of the coating composition to be used for coating the top coat layer is extremely important in the present invention.

The top coat layer must be such that it is stable and durable for a long period of time when the composite metal sheet of the invention is used in the outdoors and, additionally, it reacts with the functional groups existing on the surface of the polyolefin resin layer thereby improving its adhesiveness to the underlying resin interlayer.

After having tested various coating compositions, it has been found that polyester resin paints and fluorine resin paints of fluoro-olefin vinyl ether polymers, containing isocyanates as the crosslinking agent, are preferred.

For instance, when melamine-curing polyester resin compositions and vinylidene fluoride-based fluorine resin compositions containing thermoplastic acrylic resins as the binder are used to form the top coat layer, the primary adhesiveness of the top coat layer formed to the underlying rein interlayer may be obtained but its adhesiveness is noticeably lowered after the composite metal sheet is kept wet for a long period of time.

Therefore, in order to ensure the stable adhesiveness between the top coat layer and the underlying resin interlayer while the composite metal sheet is used in the outdoors for a long period of time, the coating composition for the top coat layer must contain an isocyanate compound as the crosslinking agent.

It is recommended that the amount of the isocyanate compound to be used as the crosslinking agent is from 15 to 55 parts by weight to 100 parts by weight of the resin in the coating composition (paint).

If the amount of the isocyanate compound is less than 15 parts by weight, the hardness of the top coat layer itself will be low and a suitable top coat layer cannot be formed.

If, on the other hand, the amount of the isocyanate compound is more than 55 parts by weight, the top coat layer to be formed will be too hard so that its formability is worsened, thereby causing some problems in shaping and machining the composite metal sheet.

It is recommended that the thickness of the top coat layer is within the range between 8 µm and 35 µm. If the thickness of the top coat layer is less than 8 µm, ultraviolet rays will pass through the top coat layer while the composite metal sheet is used in the outdoors, thereby deteriorating the resin interlayer. As a result, there will be an unfavorable probability that the adhesiveness between the resin interlayer and the top coat layer is lowered.

On the other hand, even if the thickness is more than 35 µm, such a thick top coat layer will no more be effective in improving the corrosion resistance, the weather resistance and the formability of the composite metal sheet but will rather increase the production costs.

As mentioned above, antimony trioxide and a bromine compound may be added to the resin interlayer so as to improve the flame resistance of the interlayer. Like this, antimony trioxide and a bromine compound may also be added to the top coat layer, thereby further improving the flame resistance of the composite metal sheet.

It is also recommended, like the resin interlayer, that the amounts of the antimony trioxide and the bromine compound to be added to the top coat layer are from 3 to 15 parts by weight each, to 100 parts by weight of the resin in the layer.

If the amounts are less than 3 parts by weight, the improvement in the flame resistance of the top coat layer will be insufficient. If, however, they are more than 15 parts by weight, the improvement in its flame resistance will no more be enhanced but the formability of the composite metal sheet of the invention will be worsened rather defectively.

If desired, a silver-containing, inorganic anti-microbial agent may be added to the top coat layer, thereby making it resistant to microbes and fungi (mold).

As the silver-containing, inorganic anti-microbial agent usable for this purpose, for example, mentioned are titanium phosphate-zinc oxide-silver, zeolite-silver, apatite-silver, zirconium phosphate-silver, Apacider A of a sintered product composed of calcium phosphate and a silver compound (produced by Sangi Co.), Clean P-2-D consisting essentially of SiO₂.Al₂O₃.ZnO.Li₂O.Ag (produced by Nichihan Laboratories Co.), etc.

Such a microbicide is added to the top coat layer in an amount of from 0.05 to 2 parts by weight to 100 parts by weight of the top-coating resin. If its amount is less than 0.05 parts by weight, the anti-bacterial and anti-fungal property of the layer will be low. However, even if its amount is more than 2 parts by weight, the anti-bacterial and anti-fungal property of the layer will be no more improved.

### Examples :

Next, the present invention will be explained hereunder by means of the following examples and comparative examples.

Table 1 shows the manufacture conditions in Example 1 to Example 6 of the present invention.

Table 2 shows the manufacture conditions in Comparative Example 1 to Comparative Example 7, which are similar to the method of the present invention but deviate from the conditions of the present invention.

Table 3 shows the manufacture conditions in Comparative Example 8 to Comparative Example 12 which demonstrate the manufacture of conventional coated steel sheets.

In Comparative Example 1, the top coat layer was formed without modifying the surface of the polyolefin resin layer.

In Comparative Example 2, the surface modification of the polyolefin resin layer was effected by corona discharging but the formation of the functional groups thereon was unsatisfactory. In Comparative Example 3, the formation of the functional groups on the polyolefin resin layer was excessive due to the surface modification of the layer.

In Comparative Example 4, the top coat layer was made of a fluorine-containing paint which is not an urethane-curing composition. In Comparative Example 5, the top coat layer was made of a melamine-curing polyester paint.

In Comparative Example 6, the thickness of the resin interlayer is thin and 40 µm. In Comparative Example 7, the content of the rust-inhibiting pigment in the undercoat layer is low and 5 %.

Table 4 shows the manufacture conditions of examples of the present invention and comparative examples, in which additives for improving the flame resistance of the samples and additives for improving the anti-bacterial and anti-fungal properties thereof were added to the resin interlayer and the top coat layer, respectively.

In Examples 7 to 11 and Comparative Examples 13 to 15 in Table 4, all the conditions were the same with respect to the kind of the metal substrate, the thickness of the metal substrate, the chemical treatment, the kind of the undercoat composition, the thickness of the undercoat layer, the temperature at which the undercoat layer was dried and the time for drying the undercoat layer, but the conditions for the step of forming the resin interlayer and the successive steps were varied to those indicated in Table 4.

Precisely, the same conditions were such that a zinc-plated steel substrate having a thickness of 0.8 mm was coated with a chromate coating composition, and then a undercoat composition of an epoxy resin containing 30 % of a rust-inhibiting pigment was coated thereover at a thickness of 4 µ and dried at 200°C for 60 seconds.

Table 5 shows the results of the test for evaluating the adhesiveness between the polyolefin resin layer and the top coat layer in the samples of Example 1 to Example 6, Example 9, Example 10, and Comparative Example 1 to Comparative Example 5.

The adhesiveness was determined by a cross-cut tape-peeling test according to JIS K5400 and represented by the number of the squares remained without being peeled, per 100 squares tested.

To evaluate the secondary adhesiveness of each sample, the samples were tested in the manner as mentioned below. The test results are shown also in Table 5. Precisely, each sample was subjected to a cycle test of 10 cycles, in which one cycle comprised dipping in boiling water for 24 hours, then drying in air for 24 hours, then subjecting to the cross-cut tape-peeling test, then dipping in water at 60°C for 20 days, then drying in air for 24 hours, then subjecting to the cross-cut tape-peeling test, then keeping at -20°C for 8 hours and then keeping at 60°C for 16 hours, in this order. After the cycle test, each sample was subjected to the cross-cut tape-peeling test, then kept at a temperature of 50°C and a humidity of 98 % or more for 2000 hours, then dried in air for 24 hours, and then subjected to the final cross-cut tape-peeling test.

Table 6 shows the results of the tests for evaluating various film properties of the samples of Example 1 to Example 6, Example 9, Example 10, Comparative Example 6, Comparative Example 7, and Comparative Examples 8 to 12 for the prior art.

The corrosion resistance was determined by a salt spraying test according to JIS Z2700, in which salt spraying was effected for 3000 hours. Before the test, each sample was treated in the manner mentioned below to make a 0T - bent area and a scratched area. After the test, the flat area, the 0T-bent area and the scratched area in each sample were checked as to whether or not they were corroded.
(1) Using a vise, each sample was bent to form a 0T-bent area.
(2) A zinc-iron plate was cut with shears, and the surface of each sample was rubbed with the rough edge (burr) of the thus-cut plate, by which the surface was scratched.

The weather resistance was determined by a sun shine weather meter test according to JIS K5400, in which each sample was exposed for 3000 hours.
After thus exposed, the color difference between the sample and the standard sheet and the percentage of the gloss retention of the surface of each sample were measured.

The formability was determined by a bending test for adhesiveness and a Du Pont impact strength test.

The samples shown in Table 7, each containing flame retardants, were tested by a firing test according to JIS A1321, and the test results are shown in the same table.

The sample of Comparative Example 13 contained no flame retardant. The sample of Comparative Example 14 contained flame retardants in both the resin interlayer and the top coat layer but their amounts were not sufficient.

The samples shown in Table 8, each containing an anti-bacterial and anti-fungal agent in the top coat layer, were tested with respect to their anti-bacterial and anti-fungal properties. The test results are shown in the same table.

Precisely, to determine the anti-bacterial property of each sample, a liquid containing Escherichia coli (hereinafter referred to as "bacteria") and a liquid containing Staphylococcus aureus (hereinafter referred to as "bacteria") was dropped onto each sample, which was then kept at 25°C for 24 hours. Then, the number of the living bacteria on each sample was counted. The number of the bacteria before the test was 5 × 10⁵.

To determine the anti-fungal property of each sample, the number of the living bacteria on each sample that had been treated and kept for 7 days in the same manner as above was counted. The sample of Comparative Example 13 contained no anti-bacterial and anti-fungal agent. The sample of Comparative Example 15 contained an anti-bacterial and anti-fungal agent in the top coat layer but its amount was not sufficient.

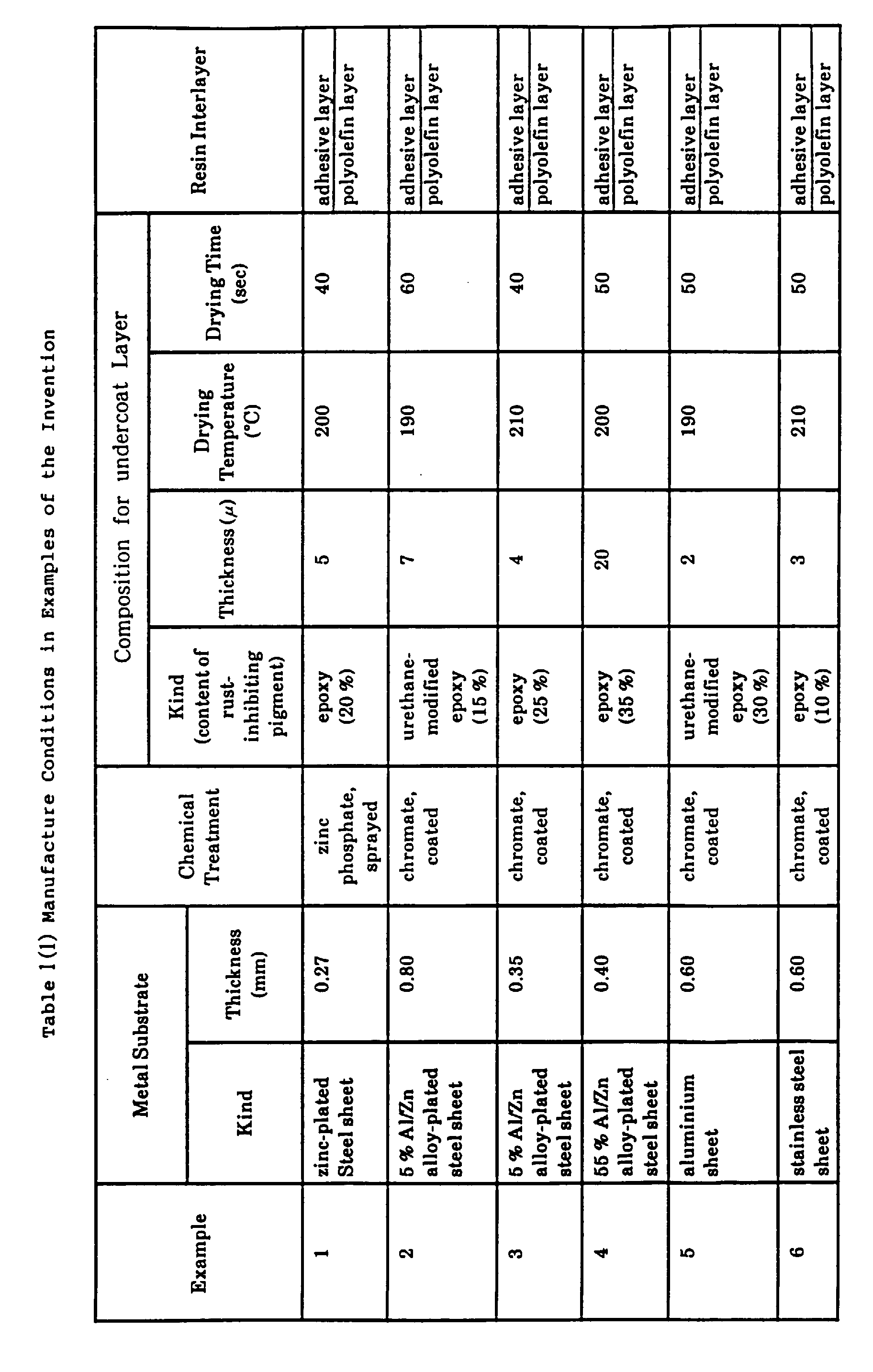

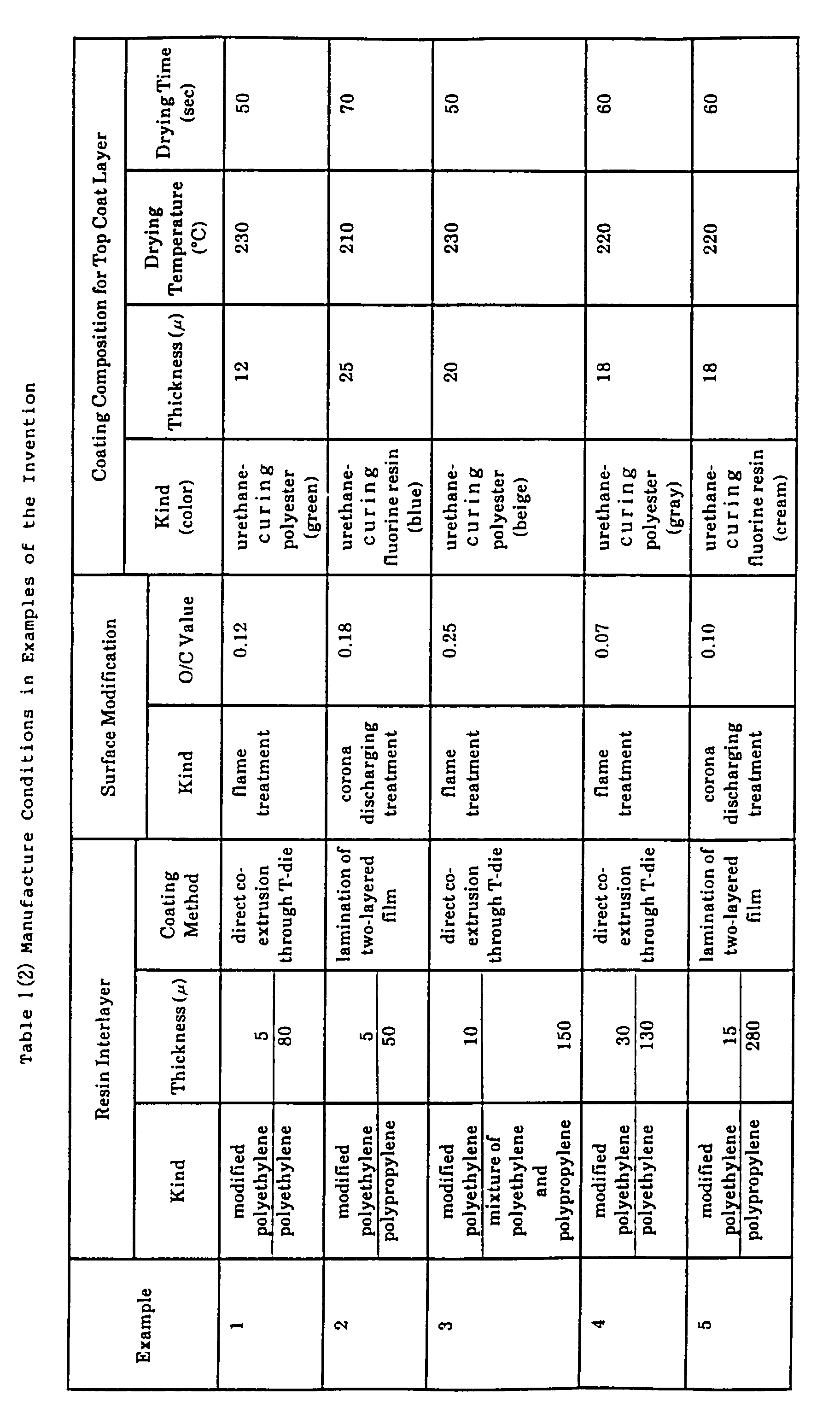

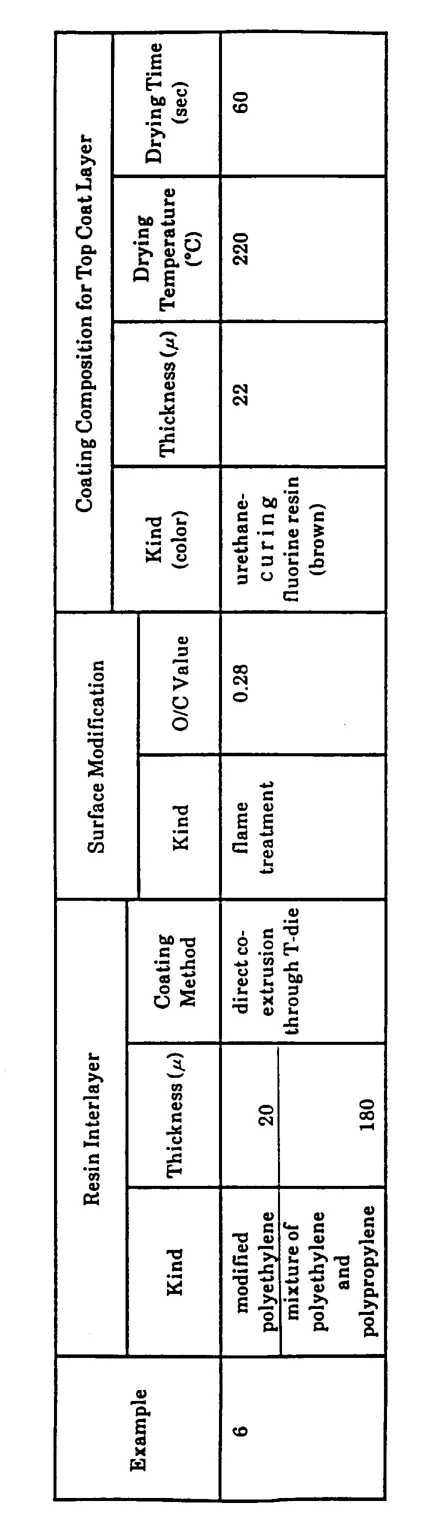

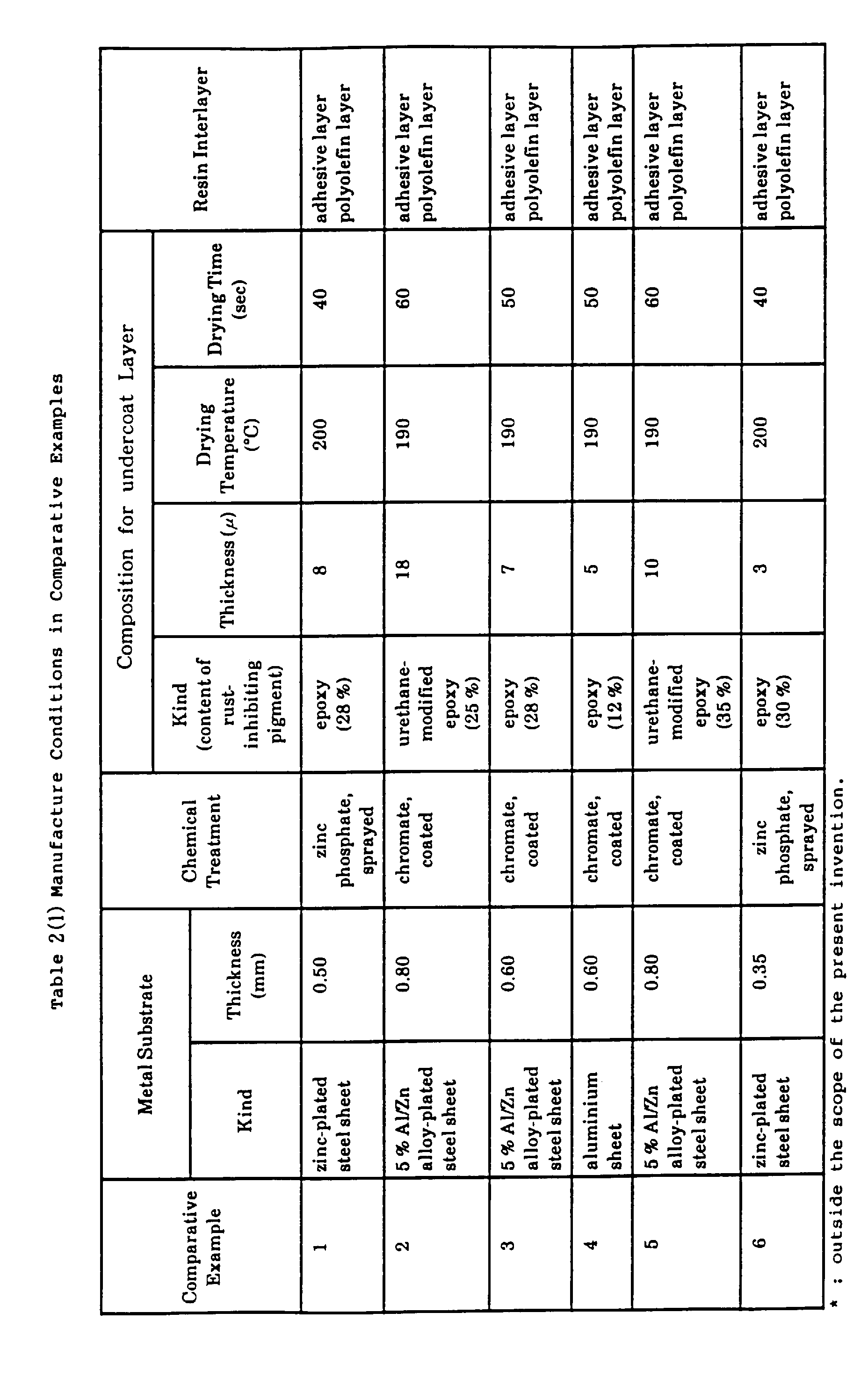

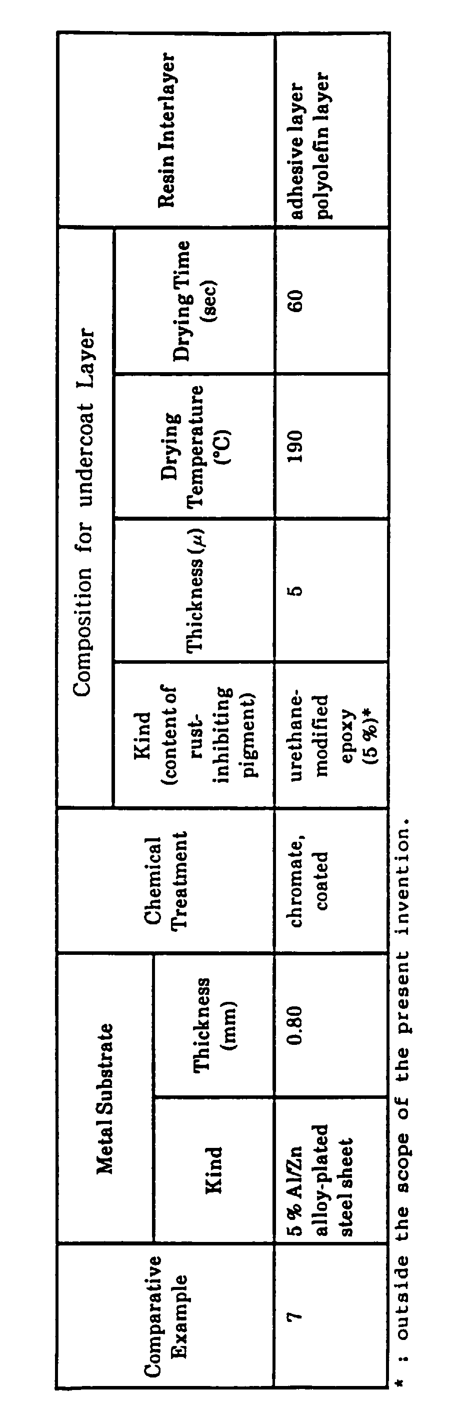

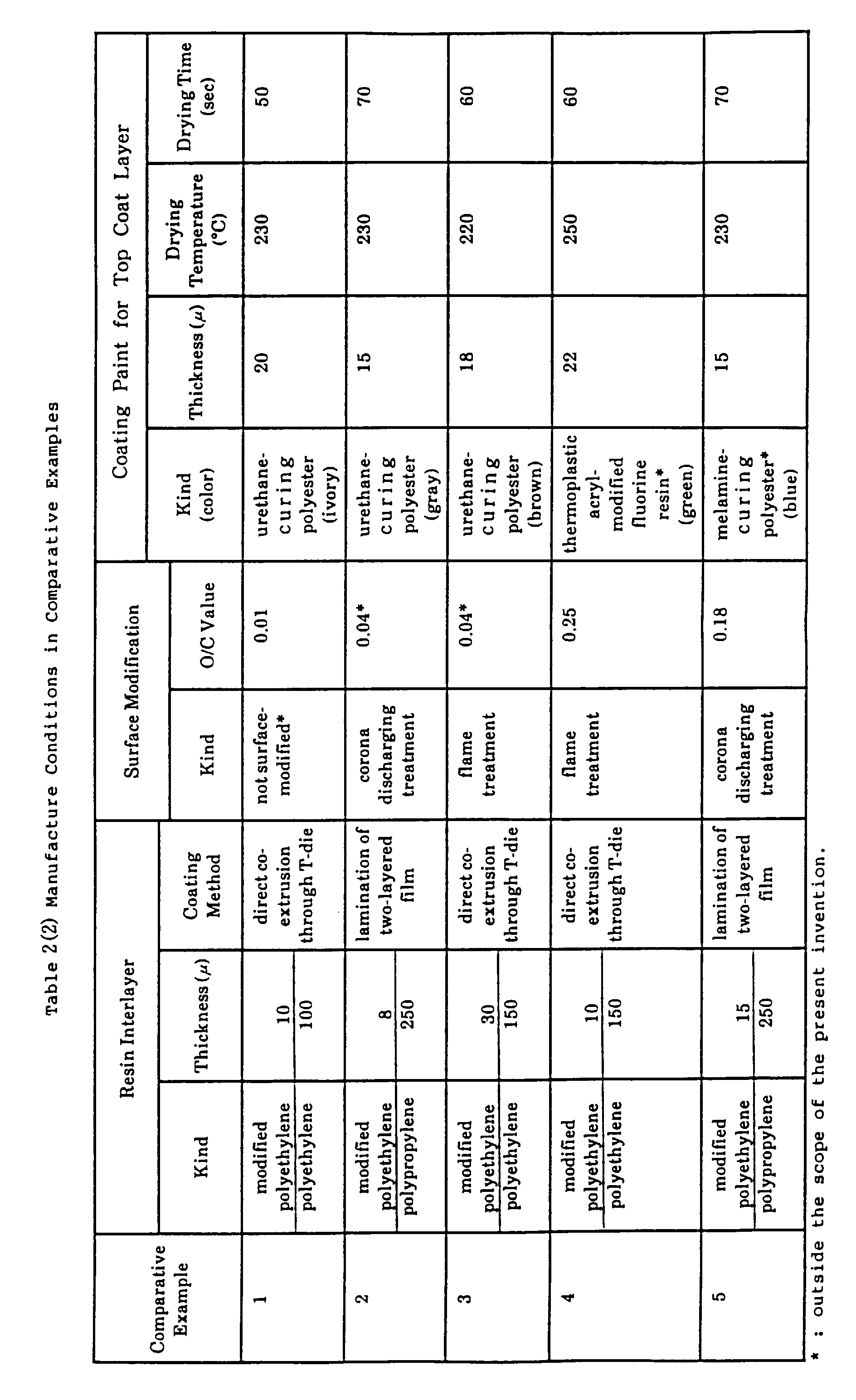

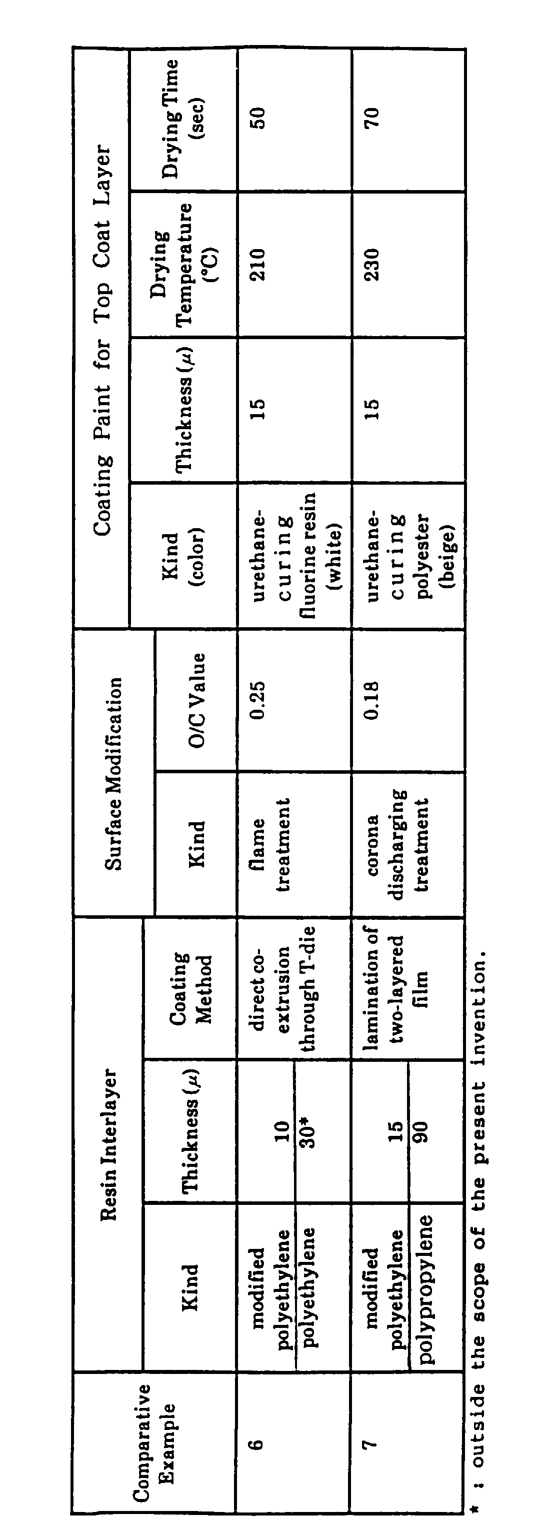

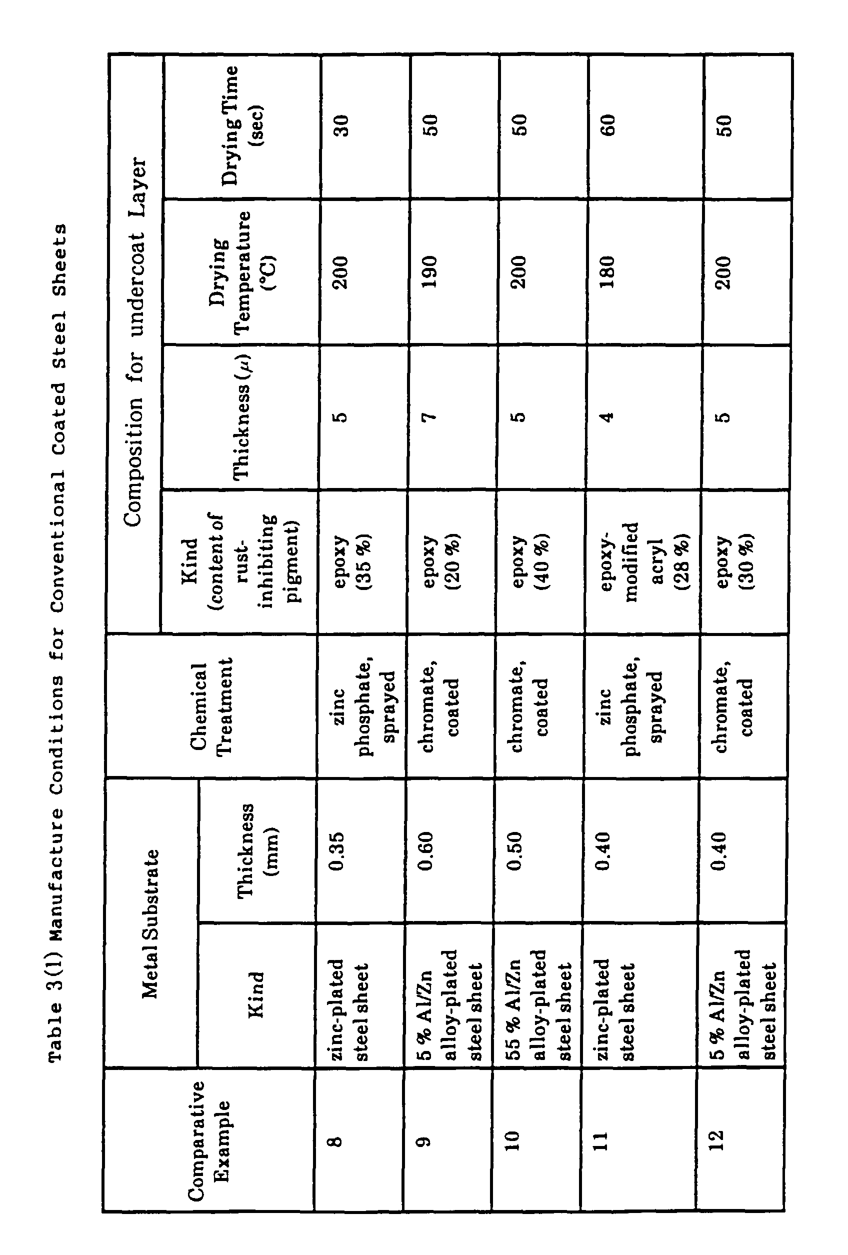

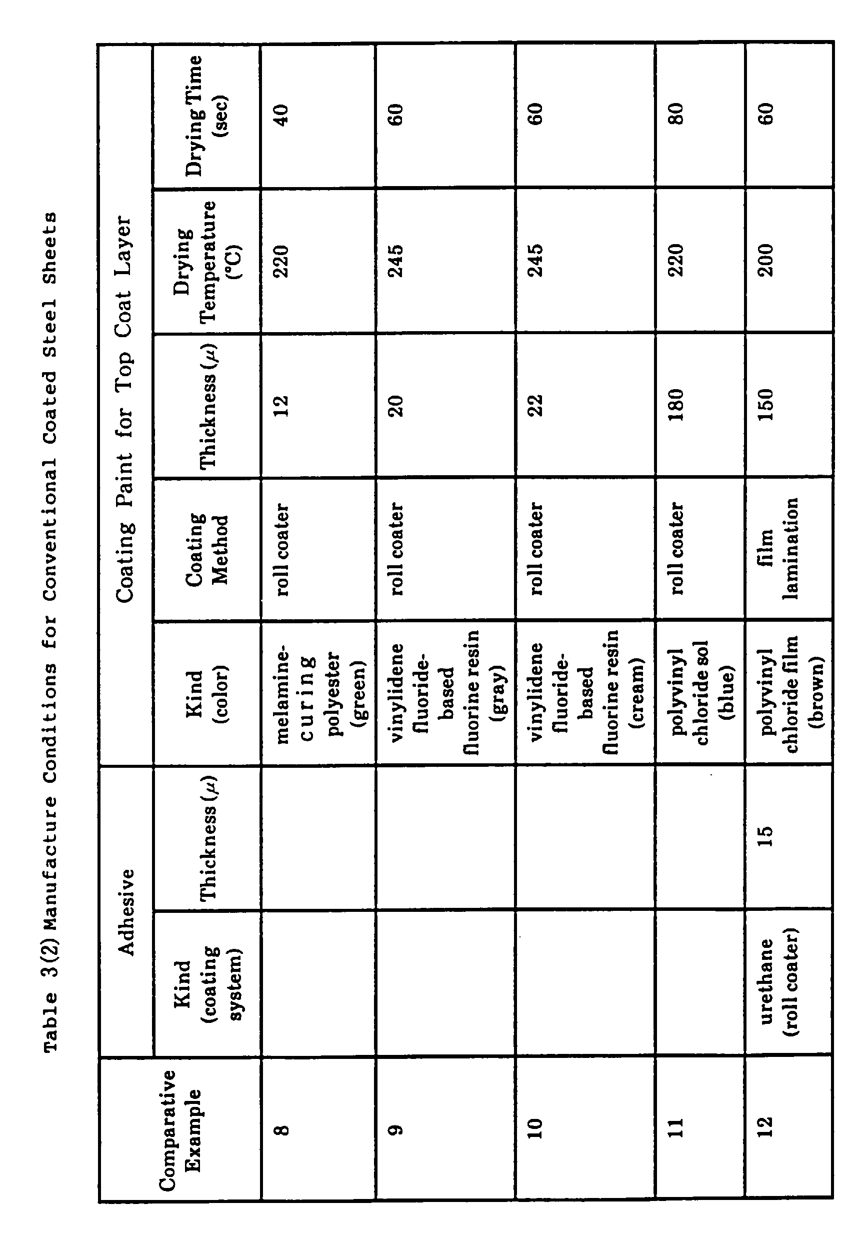

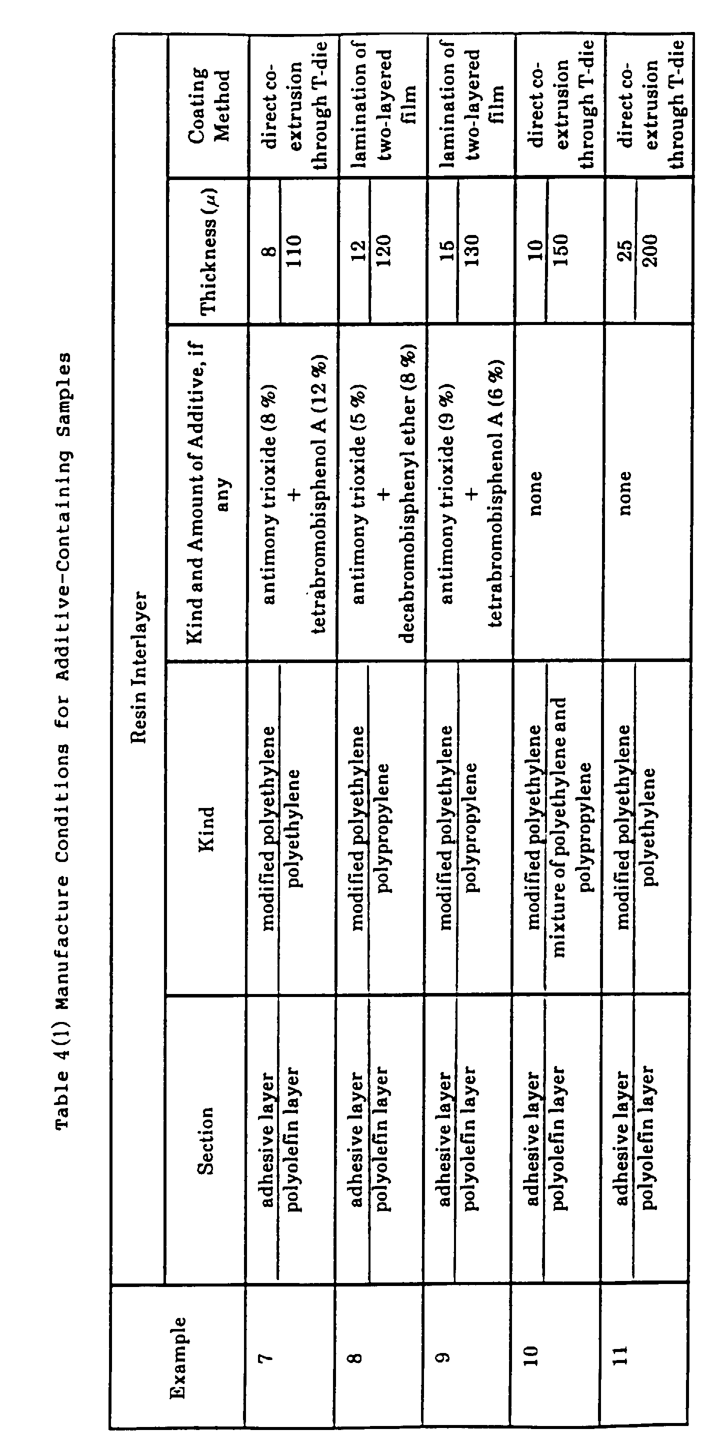

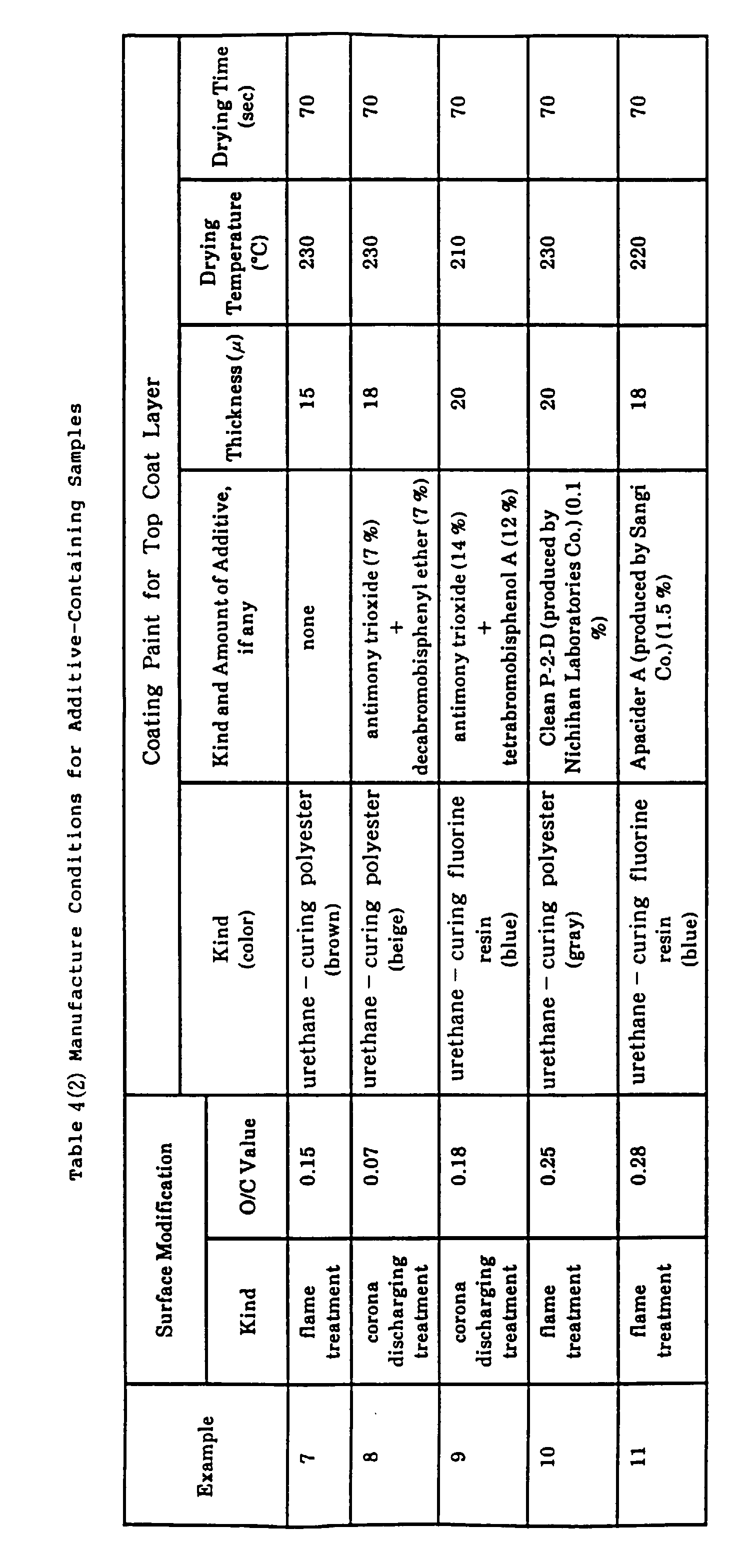

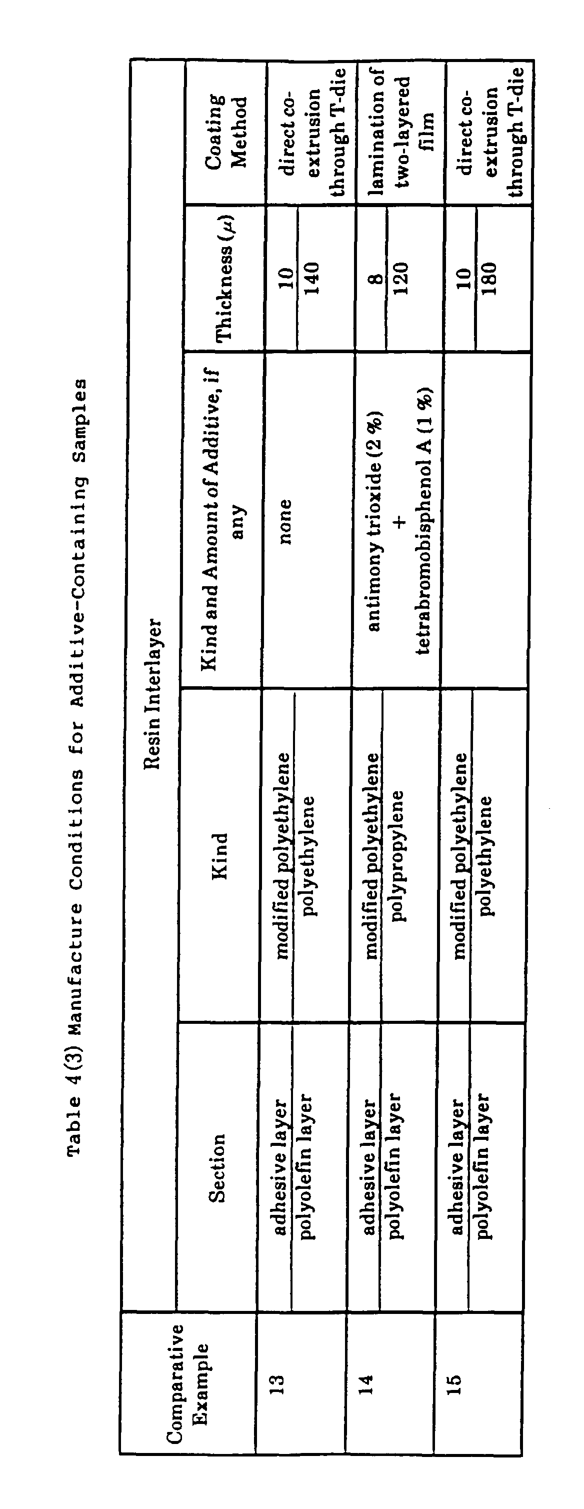

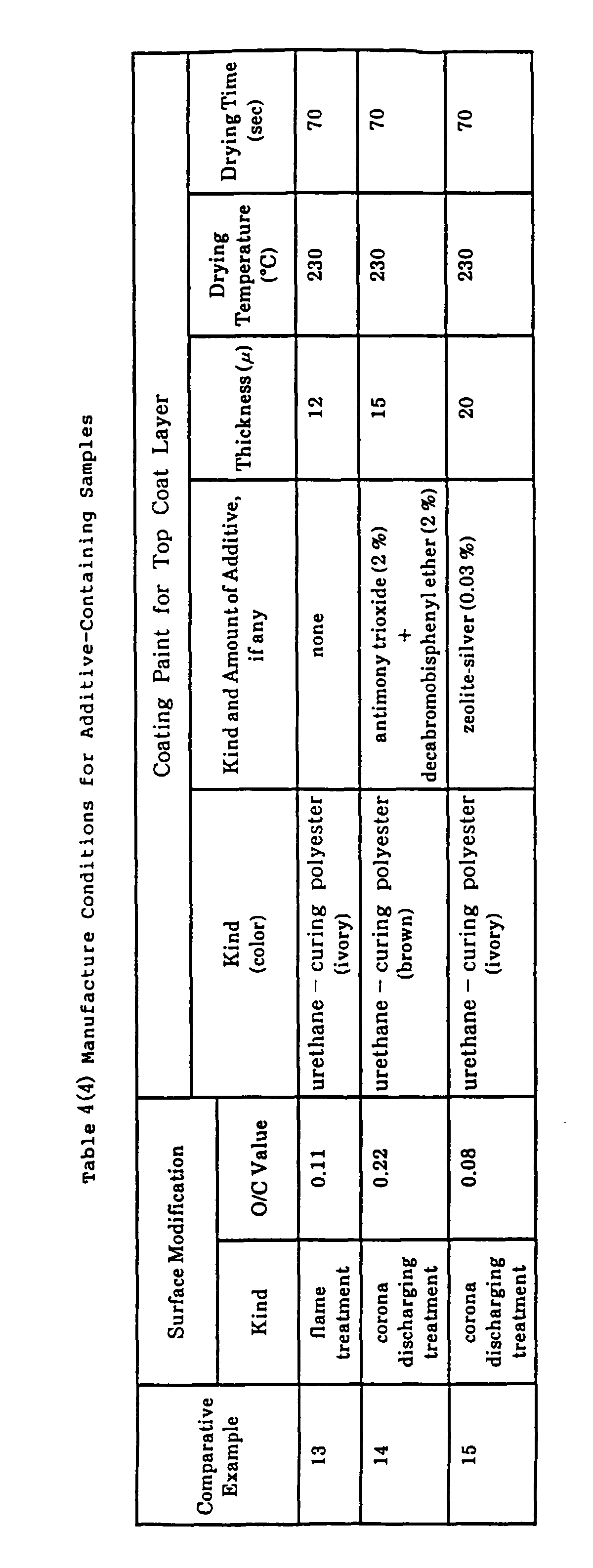

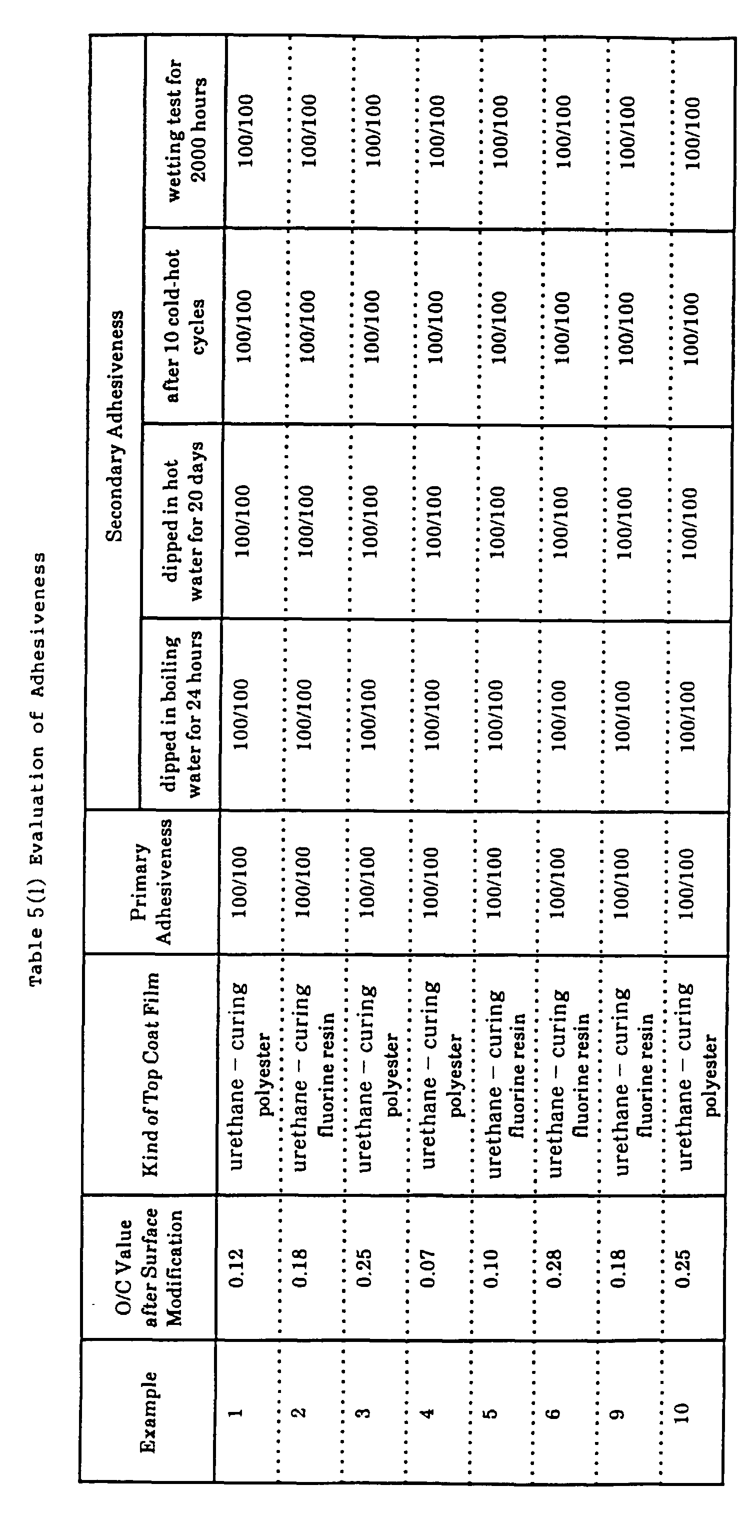

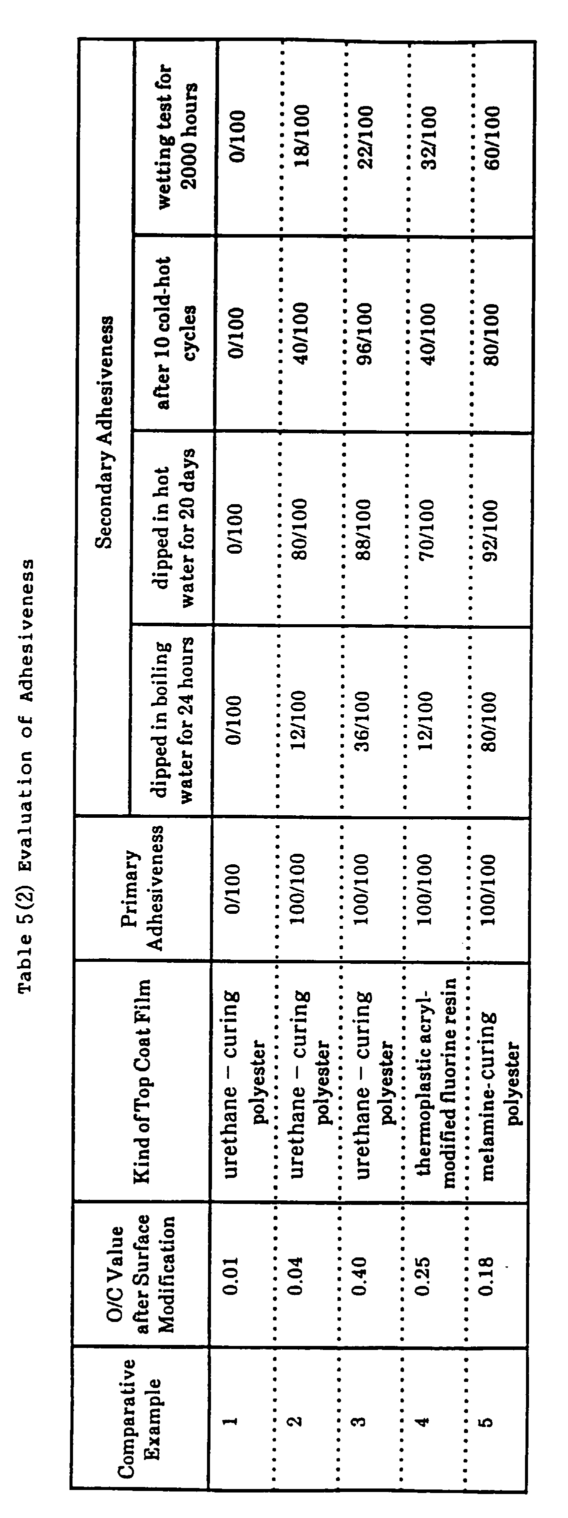

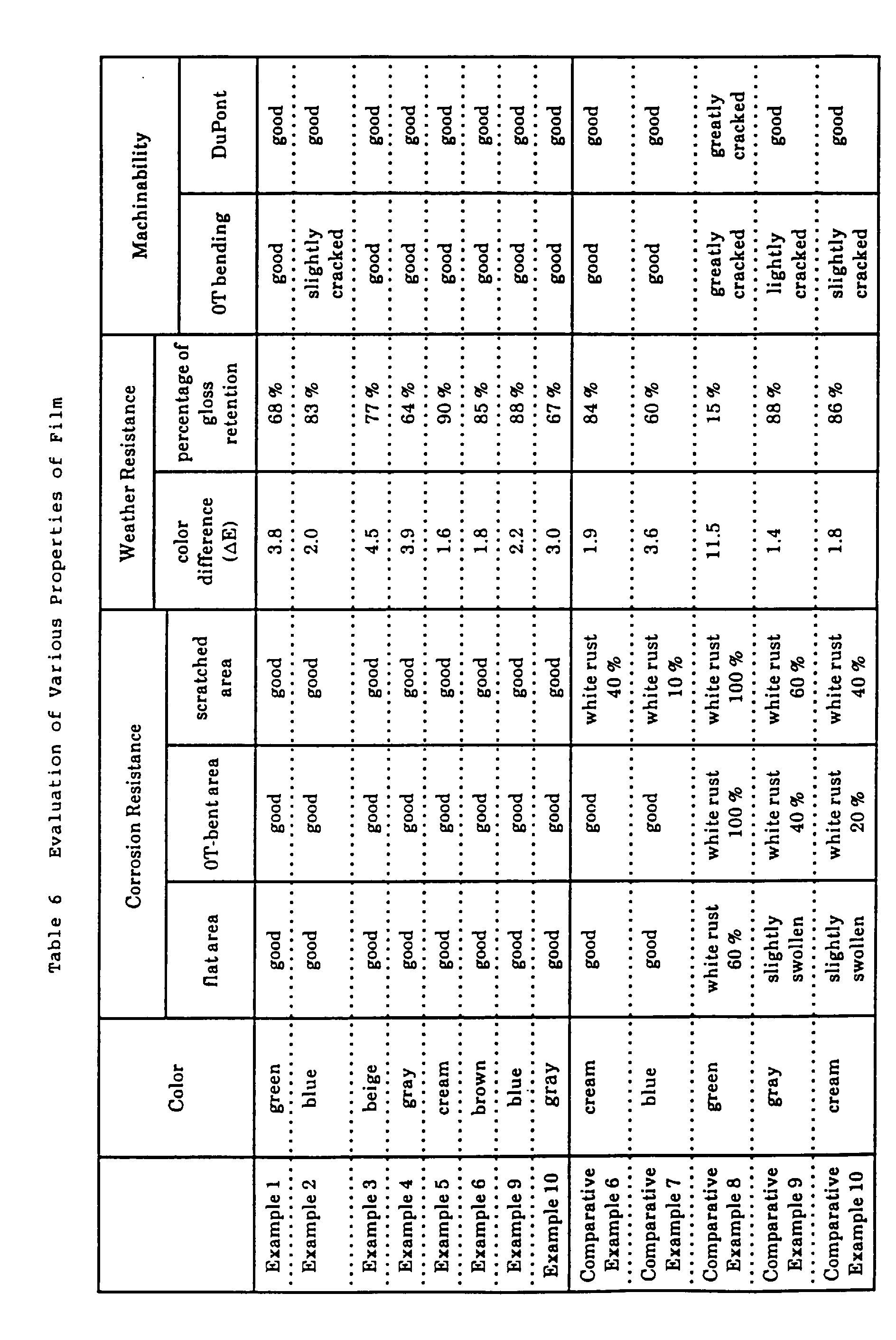

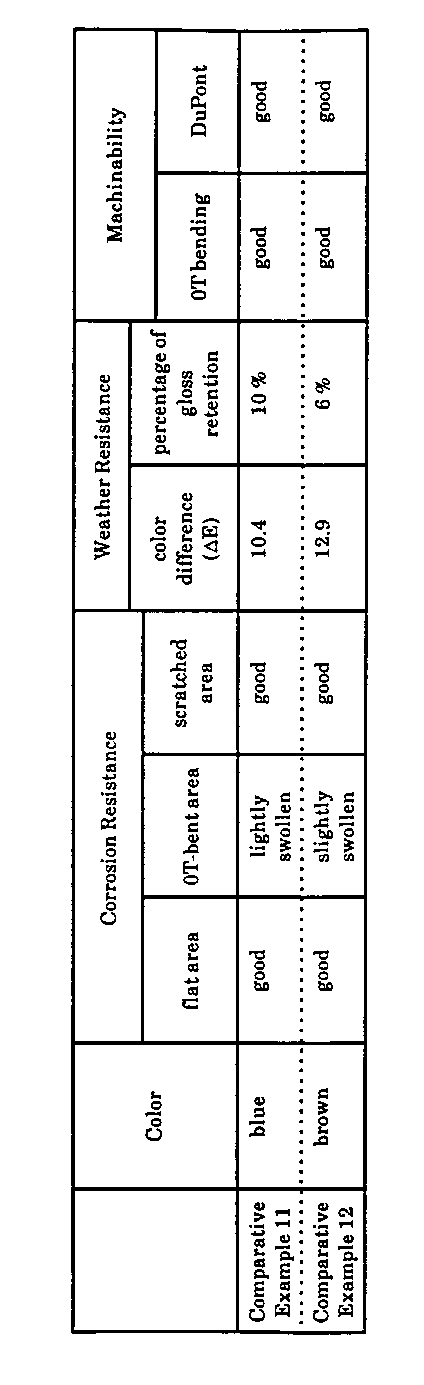

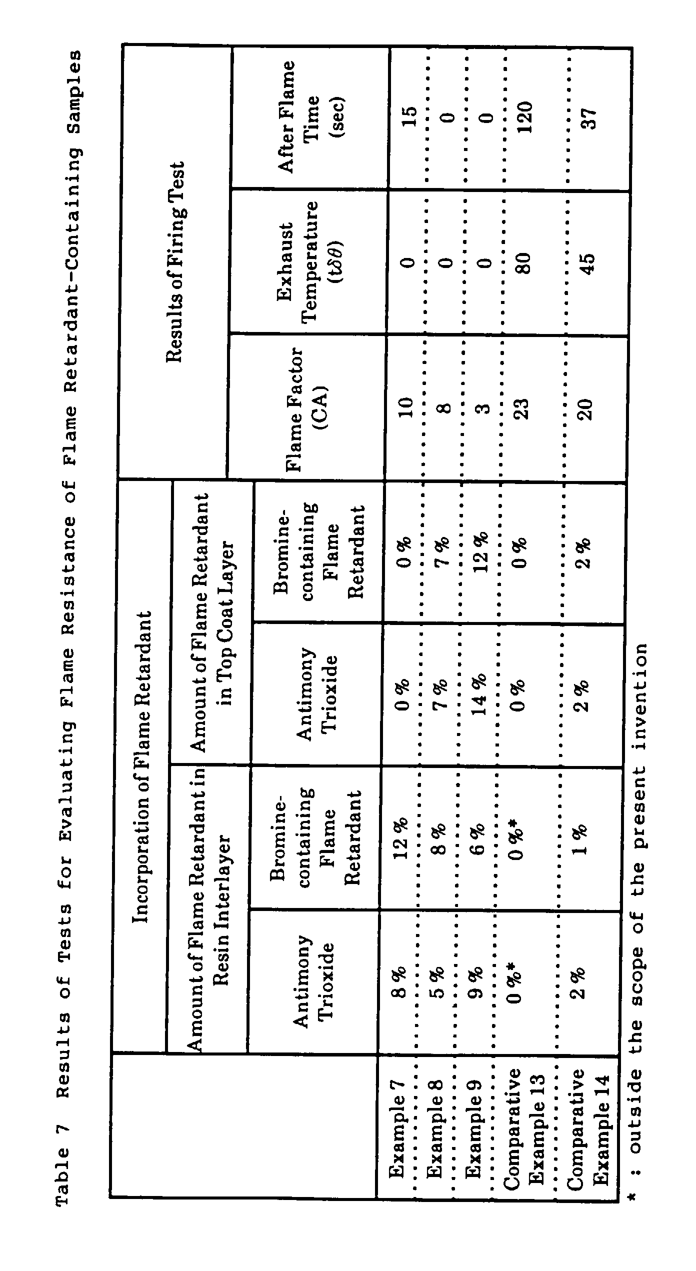

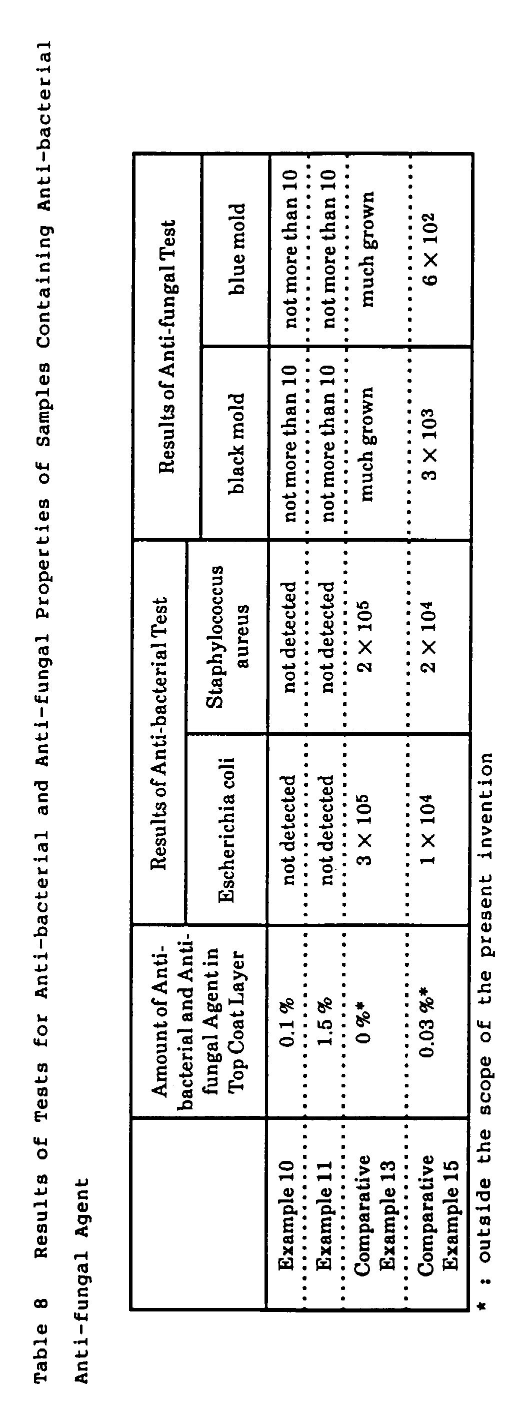

As mentioned hereinabove, since the composite metal sheet of the present invention has a top coat layer made of an urethane-curing polyester resin composition or an urethane-curing fluorine-containing resin composition on the interlayer made of a polyolefin resin composition, it has extremely excellent corrosion resistance due to the intrinsic characteristics of the polyolefin resin of being resistant to water penetration and moisture penetration.

Although the polyolefin resins in the interlayer have a drawback in that they are deteriorated by ultraviolet rays, the top coat layer may protect the interlayer from ultraviolet rays. In addition, the top coat layer has excellent weather resistance.

The composite metal sheet of the present invention has much more excellent durability than other coated metal sheets to be obtained by conventional continuous coating methods, continuous laminating methods or continuous hot melt-coating methods.

In addition, when a flame retardant is added to the resin interlayer and the top coat layer of the composite metal sheet of the present invention, thereby improving the flame resistance of the sheet, then it is unnecessary to reduce the thickness of the resin interlayer. In addition, there is no risk of worsening the corrosion resistance of the composite metal sheet even though the sheet is scratched when machined.

Further, when an anti-bacterial and anti-fungal agent is added to the top coat layer, then the composite metal sheet having such excellent weather resistance and corrosion resistance may additionally have excellent anti-bacterial and anti-fungal properties.

## Claims

1. A composite metal sheet having, on the surface of a metal substrate, a chemical-treated layer as the undermost layer, a undercoat layer of an organic resin-based paint thereon, a two-layered resin interlayer with a thickness of from 50 to 300 µm composed of an adhesive layer of a modified polyolefin resin and a polyolefin resin layer, the surface of said resin interlayer having been modified to have functional groups thereon in an amount of from 0.05 to 0.30 in terms of O/C representing the ratio of the amount of oxygens in the functional groups to the amount of carbons on the surface, and a top coat layer with a thickness of from 8 to 35 µm made of an urethane-curing polyester resin or an urethane-curing fluorine resin, in this order.

2. A method for producing a composite metal sheet comprising steps of chemically treating the surface of a metal substrate, coating and drying an organic resin-based paint thereon to form a undercoat layer, then forming thereon a two-layered resin interlayer composed of an adhesive layer of a modified polyolefin resin and a polyolefin resin layer at a thickness of from 50 to 300 µm, then modifying the surface of said polyolefin resin layer by flame treatment or corona discharging treatment thereby forming functional groups thereon in an amount of from 0.05 to 0.30 in terms of O/C representing the ratio of the amount of oxygens in the functional groups to the amount of carbons on the surface, and finally coating and drying an urethane-curing polyester resin or an urethane-curing fluorine resin at a thickness of from 8 to 35 µm to form a top coat layer.

3. The composite metal sheet as claimed in claim 1, in which the undercoat layer contains, as a rust-inhibiting pigment, strontium chromate or zinc chromate or a mixture of strontium chromate and zinc chromate in an amount of from 10 to 40 parts by weight relative to 100 parts by weight of the resin in the layer.

4. The composite metal sheet as claimed in claim 1 or 3, in which the resin interlayer contains, as flame resistance improving agents, antimony trioxide and a bromine-containing flame retardant, in an amount of from 3 to 15 parts by weight each, relative to 100 parts by weight of the resin in the layer.

5. The composite metal sheet as claimed in claim 1, 3 or 4, in which both the resin interlayer and the top coat layer contain, as flame resistance improving agents, antimony trioxide and a bromine-containing flame retardant, in an amount of from 3 to 15 parts by weight each, relative to 100 parts by weight of the resin in each layer.

6. The composite metal sheet as claimed in claim 1, 3, 4 or 5, in which the top coat layer contains, as an anti-bacterial and anti-fungal agent, a silver-containing, inorganic anti-microbial agent in an amount of from 0.05 to 2 parts by weight relative to 100 parts by weight of the resin in the layer.

7. The composite metal sheet as claimed in claim 1, 3, 4, 5 or 6, in which the thickness of the resin interlayer is from 80 to 300 µm.

## Patentansprüche

1. Metall-Verbundplatte, die an der Oberfläche eines Metallsubstrats eine chemikalienbehandelte Schicht als unterste Schicht, eine Grundierungsschicht aus einem Anstrich auf Basis eines organischen Harzes darauf, eine zweilagige Harz-Zwischenschicht mit einer Dicke von 50 bis 300 µm, die aus einer Kleberschicht aus einem modifizierten Polyolefinharz und einer Polyolefinharzschicht besteht, wobei die Oberfläche der Harz-Zwischenschicht so modifiziert worden ist, dass sie darauf funktionelle Gruppen in einer Menge aufweist, die einem O/C-Verhältnis, dem Verhältnis zwischen der Menge an Sauerstoffatomen in den funktionellen Gruppen und der Menge an Kohlenstoffatomen an der Oberfläche, von 0,05 bis 0,30 entspricht, sowie eine Decküberzugsschicht mit einer Dicke von 8 bis 35 µm aus einem urethanhärtenden Polyesterharz oder einem urethanhärtenden Fluorharz in dieser Reihenfolge aufweist.

2. Verfahren zur Herstellung einer Metall-Verbundplatte, umfassend die Schritte des chemischen Behandelns der Oberfläche eines Metallsubstrats, des Aufbringens und Trocknens eines Anstrichs auf Basis eines organischen Harzes darauf, um eine Grundierungsschicht zu bilden, des anschließenden Ausbildens einer zweilagigen Harz-Zwischenschicht darauf, die aus einer Kleberschicht aus einem modifizierten Polyolefinharz und einer Polyolefinharzschicht mit einer Dicke von 50 bis 300 µm besteht, des anschließenden Modifizierens der Oberfläche des Polyolefinharzschicht durch Flammbehandlung oder Glimmentladungsbehandlung, wodurch darauf funktionelle Gruppen in einer Menge gebildet werden, die einem O/C-Verhältnis, dem Verhältnis zwischen der Menge an Sauerstoffatomen in den funktionellen Gruppen und der Menge an Kohlenstoffatomen an der Oberfläche, von 0,05 bis 0,30 entspricht, und des abschließenden Beschichtens und Trocknens eines urethanhärtenden Polyesterharzes oder eines urethanhärtenden Fluorharzes mit einer Dicke von 8 bis 35 µm, um eine Decküberzugsschicht zu bilden.

3. Metall-Verbundplatte nach Anspruch 1, bei der die Grundierungsschicht als rosthemmendes Pigment Strontiumchromat oder Zinkchromat oder ein Gemisch aus Strontiumchromat und Zinkchromat in einer Menge von 10 bis 40 Gewichtsteilen, bezogen auf 100 Gewichtsteile des Harzes in der Schicht, enthält.

4. Metall-Verbundplatte nach Anspruch 1 oder 3, bei der die Harz-Zwischenschicht als Flammbeständigkeit verbessernde Mittel Antimontrioxid und einen bromhältigen Flammhemmer jeweils in einer Menge von 3 bis 15 Gewichtsteilen, bezogen auf 100 Gewichtsteile des Harzes in der Schicht, enthält.

5. Metall-Verbundplatte nach Anspruch 1, 3 oder 4, in der sowohl die Harz-Zwischenschicht als auch die Decküberzugsschicht als Flammbeständigkeit verbessernde Mittel Antimontrioxid und einen bromhältigen Flammhemmer jeweils in einer Menge von 3 bis 15 Gewichtsteilen, bezogen auf 100 Gewichtsteile des Harzes in der jeweiligen Schicht, enthalten.

6. Metall-Verbundplatte nach Anspruch 1, 3, 4 oder 5, bei der die Decküberzugsschicht als antibakterielles und pilzhemmendes Mittel ein silberhältiges, anorganisches, antimikrobielles Mittel in einer Menge von 0,05 bis 2 Gewichtsteilen, bezogen auf 100 Gewichtsteile des Harzes in der Schicht, enthält.

7. Metall-Verbundplatte nach Anspruch 1, 3, 4, 5 oder 6, bei der die Dicke der Harz-Zwischenschicht 80 bis 300 µm beträgt.

## Revendications

1. Feuille métallique composite ayant, sur la surface d'un substrat métallique, une couche traitée chimiquement comme couche la plus basse, une couche de fond d'une peinture à base de résine organique appliquée sur elle, une double couche intermédiaire de liaison de résine avec une épaisseur de 50 à 300 µm composée d'une couche adhésive d'une résine de polyoléfine modifiée et d'une couche de résine de polyoléfine, la surface de ladite couche de liaison de résine ayant été modifiée pour porter des groupements fonctionnels dans une quantité de 0,05 à 0,30 en termes de O/C représentant le rapport de la quantité d'atomes d'oxygène dans les groupements fonctionnels à la quantité d'atomes de carbone sur la surface, et une couche superficielle de finition avec une épaisseur de 8 à 35 µm faite d'une résine de polyester durcissant l'uréthanne ou d'une résine de fluor durcissant l'uréthanne, dans cet ordre.

2. Procédé pour la production d'une feuille métallique composite comprenant les étapes de traitement chimique de la surface d'un substrat métallique, l'application et le séchage d'une peinture à base de résine organique sur elle pour former une couche de fond, ensuite la formation sur elle d'une double couche intermédiaire de liaison de résine composée d'une couche adhésive d'une résine de polyoléfine modifiée et d'une couche de résine de polyoléfine à une épaisseur de 50 à 300 µm, ensuite la modification de la surface de ladite couche de résine de polyoléfine par traitement à la flamme ou par traitement par décharge par effet couronne, y formant ainsi des groupements fonctionnels sur elle dans une quantité de 0,05 à 0,30 en termes de O/C représentant le rapport de la quantité d'atomes d'oxygène dans les groupements fonctionnels à la quantité d'atomes de carbone sur la surface, et finalement l'application et le séchage d'une résine de polyester durcissant l'uréthanne ou d'une résine de fluor durcissant l'uréthanne à une épaisseur de 8 à 35 µm pour former une couche superficielle de finition.

3. Feuille métallique composite selon la revendication 1, dans laquelle la couche de fond contient, comme pigment protecteur contre la rouille, du chromate de strontium ou du chromate de zinc ou un mélange de chromate de strontium et de chromate de zinc dans une quantité de 10 à 40 parties en poids par rapport aux 100 parties en poids de la résine dans la couche.

4. Feuille métallique composite selon la revendication 1 ou 3, dans laquelle la couche de liaison de résine contient, comme agents améliorant la résistance au feu, du trioxyde d'antimoine et un ignifuge contenant du brome, dans une quantité de 3 à 15 parties en poids chacun, par rapport à 100 parties en poids de la résine dans la couche.

5. Feuille métallique composite selon la revendication 1, 3 ou 4, dans laquelle à la fois la couche de liaison de résine et la couche de finition contiennent, comme agents améliorant la résistance au feu, du trioxyde d'antimoine et un ignifuge contenant du brome, dans une quantité de 3 à 15 parties en poids chacun, par rapport à 100 parties en poids de la résine dans chaque couche.

6. Feuille métallique composite selon la revendication 1, 3, 4 ou 5, dans laquelle la couche de finition contient, comme agent antibactérien et antifongique, un agent antimicrobien inorganique contenant de l'argent, dans une quantité de 0,05 à 2 parties en poids par rapport à 100 parties en poids de la résine dans la couche.

7. Feuille métallique composite selon la revendication 1, 3, 4, 5 ou 6, dans laquelle l'épaisseur de la couche de liaison de résine est de 80 à 300 µm.
